# EUROPEAN PATENT SPECIFICATION

(11) **EP 2 062 210 B1**
(45) Date of publication and mention of the grant of the patent: **01.04.2015**
(21) Application number: 07784718.4
(22) Date of filing: 01.08.2007
(51) Int. Cl.: G06Q 20/42, G06F 17/30, G06Q 20/32, G06Q 20/40, G06F 21/35, G06F 21/62, H04L 29/06

(54) **TRANSACTION AUTHORISATION SYSTEM & METHOD**
SYSTEM UND VERFAHREN ZUR TRANSAKTIONSAUTORISATION
SYSTÈME ET PROCÉDÉ D'AUTORISATION DE TRANSACTION

(30) Priority: 01.08.2006 AU 2006904149 P; 01.02.2007 AU 2007900469 P
(43) Date of publication of application: 27.05.2009
(73) Proprietor: Qpay Holdings Limited, Capalaba QLD 4157 (AU)
(72) Inventor: WALTER, Greg, Capalaba, QLD 4157 (AU)
(74) Representative: Rupprecht, Kay
(86) International application number: PCT/AU2007/001076
(87) International publication number: WO 2008/014554

(56) References cited:
- EP-A1- 1 136 961
- EP-A2- 0 745 961
- WO-A1-2005/073889
- WO-A2-01/42883
- GB-A- 2 398 159
- GB-A- 2 399 209
- US-A1- 2003 221 125
- US-A1- 2004 078 238
- US-A1- 2005 043 964
- US-A1- 2006 282 395
- PATENT ABSTRACTS OF JAPAN & JP 02 027463 A (FUJITSU LTD) 30 January 1990

## Description

### FIELD OF THE INVENTION

The present invention relates to a system and method for the authorisation of transactions such as credit card purchases, bank transfers, and share purchases, particularly in environments where remote payments for goods and services are made.

### BACKGROUND OF THE INVENTION

Security of financial and other types of transactions is of great importance due to the relatively recent growth of threats such as phishing and pharming which are intended to fraudulently acquire sensitive information, such as passwords, pin numbers and credit card details, by masquerading as a trustworthy person or business in an electronic communication. Once such details are fraudulently acquired they are utilised to make financial payments or to misappropriate funds from financial accounts. The account holder is often without any knowledge of these fraudulent transactions until after they have been concluded and it is too late to intervene. It is desirable, therefore, to seek authorisation of transactions from a customer before transactions are concluded by the financial institution.

In current systems used to authorise financial transactions, it is difficult and often impossible to obtain a firm guarantee that the person initiating the transaction is the account holder and is authorised to conclude the transaction. For example, when a merchant swipes a customer's credit card, the credit card terminal connects to the merchant's acquirer, or credit card processor, which verifies that the customer's account is valid and that sufficient funds are available to cover the transaction's cost However, this process does not provide any form of verification that the individual making the transaction is indeed authorised to do so.

Although, a merchant may compare a signature on the credit card to the signature of the customer, such methods of verifying whether or not the transaction is fraudulent are far from foolproof. Furthermore, the account holder and credit card provider are relying on the merchant to deny transactions that appear to be fraudulent and unauthorised.

This issue is particularly pronounced with transactions conducted in the online environment or over the telephone, where the merchant is unable to verify the customer's signature and therefore determine whether or not the transaction is fraudulent. One method of overcoming such issues is to require the purchaser to provide a Card Verification Value Code (CW)1 which is not part of the card number itself, and is also known as CW2, CVC2, and CID. The CVV is an authentication procedure established by credit card companies to reduce fraud for internet and telephone transactions. It consists of requiring a card holder to provide the CW number at transaction time to verify that the card is on hand. While the CW code helps ascertain that the customer placing the order actually possesses the credit/debit card and that the card account is legitimate, this authentication procedure is ineffective when the card itself has been misappropriated or in scenarios where there has been unauthorised access to the financial records of the account holder.

Similarly, in current systems where the customer is required to provide a password or pin number before a transaction is authorised, unauthorised access to the account holder's records is likely to provide the information required to fraudulently authorise transactions. Accordingly, it is an object of the invention to provide a system for authorising transactions which seeks to alleviate the problems of prior art systems.

It will be clearly understood that, if a prior art publication or systems are referred to herein; this reference does not constitute an admission that the publication or system forms part of the common general knowledge in the art in Australia or in any other country.

US 2003/221125 discloses a system for authentication and/or authorisation which incorporates two communication channels, and at least one of third-party data sources, geographic correlation algorithms, speech recognition algorithms, voice biometric comparison algorithms, and mechanisms to convert textual data into speech. A site visitor's identity can be verified using one or all of such features In combination with a visitor's address on one of the channels. However, one drawback with the disclosed system is that the site visitor's data used for the authentication is vulnerable to theft especially in the case that it is transferred from an institution to an authentication provider.

JP 02-027463A discloses a password table for registering and storing a password by storing a password and data of a personal name with the password and a personal number with a user information table.

### SUMMARY OF THE INVENTION

Broadly, the invention allows transactions, such as credit card payments, online banking funds transfers, or others, to be securely authorised by a customer, preferably before the transaction is concluded by the relevant institution. In one form, such authorisation occurs when the customer, prompted by an interactive voice response (IVR) system for example, provides one or more unique identifiers to validate his or her identity and authenticate the transaction.

Alternatively, the customer may indicate that the transaction is fraudulent which is in turn communicated to the relevant institution so that appropriate actions may be taken. The information maintained by the authorisation system is separated from the account and customer records of the financial institution in order to maximise security in the authorisation process and mitigate the risk of fraudulent authentication of transactions that may arise as a result of unauthorised access to the stored information.

The invention provides a transaction authorisation system for allowing a customer to authorise transactions relating to at least one customer account associated with an institution according to independent claim 1.

In another aspect, the present invention provides a method for allowing a customer to authorise transactions relating to a least one customer account held at an institution according to independent claim 12.

Further embodiments may be realised according to the corresponding dependent claims.

In one example a remote payment system allowing a customer to transact payments for goods and services remotely in a secure manner with members of the system, the system including:
i) data storage means containing updateable data relating to each of a plurality of customers and each of a plurality of members of the system, wherein each customer has at least one associated registry profile with a related monetary reservoir;
ii) a data processing architecture including data processing means and a clearing house system for settling indebtedness between members and customers of the system,
iii) communications means associated with the data processing architecture for communicating with the customers via a remote communications device (RCD) of each of the customers,

the system being arranged for one or more of said customers to transact payments for goods or services pursuant to a payment request made by one or more of the members, the payment request triggering a communications event from the communications means to the RCD of the relevant customer for the purpose of validating the customer's identity and access to the respective registry profile, and the system being further arranged so as to validate the customer's identity and once such has taken place, allowing the customer to transact payments provided a positive balance remains in the monetary reservoir.

In another example a remote payment method allowing a customer to transact payments for goods and services remotely in a secure manner with members of a remote payment system is provided, system including:
i) data storage means for containing updateable data relating to each of a plurality of customers, and each of a plurality of members of the system, wherein each customer has at least one associated registry profile with a related monetary reservoir;
ii) data processing architecture including data processing means and a clearing house system for settling indebtedness between members and customers of the system,
iii) communications means associated with the data processing architecture for communicating with the customers via a remote communications device (RCD) of each of the customers,
wherein the customer uses the system to transact payments for goods or services pursuant to a payment request made by one or more the members, the payment request triggering a communications event from the at least one communications means to the RCD of the relevant customer for the purpose of validating the customer's identity and access to the respective registry profile, and once the customer's identity has been validated, the customer being allowed to transact payments provided a positive balance remains in the monetary reservoir.

The term transaction is intended to broadly cover various actions which may be performed on an account, such as payment requests, order requests, share transfers, funds transfers, proof of identity requests, requests to release information, or a combination of these actions. Such actions may also be initiated in variety of ways, for example, a payment request may originate from a credit card transaction at a physical store, a purchase on an ecommerce website (click-to-buy), or a remote payment system which uses a customer's mobile phone to pay for goods and services such as text-to-buy or talk-to-buy systems.

The term customer is intended to be understood to broadly include not just customers of financial institutions, but also, any persons having an account with an institution for example, employees, suppliers, or citizens relating to a government agency.

The invention advantageously provides the customer with an opportunity, preferably using at least one means of communication that is 'off line' and therefore less susceptible to security breaches, to authorise or flag a transaction before it is approved by the bank or credit card issuer, and funds are transferred to the merchant

Although it is usually desirable for the authorisation of a transaction to take place close to the end of the transaction process, it is to be appreciated that the authorisation of the transaction may take place at any point during the transaction process. For example, it Is envisioned that the authorisation of the transaction may occur even before a request for funds is made by the merchant. This is particularly advantageous in online environments where processing times of transactions are usually required to fall within specified constraints.

It is also envisioned that the invention can be applied in situations where a pre-approval authorisation is provided without first contacting the customer, allowing the transaction to proceed without delay. However, if the customer, once contacted In regards to the transaction, fails to authorise the transaction or flags the transaction as being unauthorised, the pre-authorisation is immediately revoked and if funds have already been transferred, they are also retrieved.

Use of a secure identifier such as a PIN which is memorised by the customer or biometric data (eg voice print, finger print, retina scan, behaviometric etc) means that the transaction is only authorised once the identity of the customer, using information which is not normally available to a fraudulent person, is verified. A further advantage Is provided by the fact that the customer's verification and contact details in the system are maintained In a separate data store to the customer's bank details with only a single security identifier (known only to the bank's system and the authorisation system) linking the separated data stores. Such a setup provides increased security as unauthorised access to any one of the data stores on its own will not provide information adequate to circumvent the authorisation system and conduct fraudulent transactions.

The system of the present invention is particularly useful for customers who do not have access to conventional banking facilities or those who simply want a more convenient and secure manner in which to authorise payments for goods and services, or other transactions, in a secure manner. Fees may be levied by the system administrator for transactions effected using the system, and which may be flat fees or percentages of transaction amounts, or a combination therof.

The remote communications device (RCD) may be any device capable of communication and is not limited to one-way or two-way communications devices. Examples of preferred forms of RCDs include the customer's fixed or mobile telephone, a personal computing device (whether mobile or fixed) or a facsimile or pager of the customer. All of these devices and others which are not listed but are included as a RCD can generally have a software component.

Any RCD(s) which a customer wishes to use with the system should be registered with the system and accordingly, information identifying the RCD (which is normally unique to that RCD) is recorded for use in the identification process.

The customer may designate which RCD or group of RCDs they wish to use for contact with the system and if a group is designated, for example, for multifactor authentication (discussed below), the customer may additionally designate which RCD Is to perform in which manner within the multifactor identification process.

Authorisation for a particular transaction will be dependant upon the validation of the customer's identity which will typically be required before authorisation for the transaction is given. The system sets the verification of the customer's identity as a pre-authorisation condition, and the transaction will preferably be blocked before authorisation if the condition is not satisfied. In other words, the transaction will be declined if the identity of the customer cannot be established by the system. An alert may be sent to the system administrator, notifying the system administrator of the failure to verify the identity of the customer, allowing steps to refuse or block the transaction request to be taken.

Usually, authorisation for transactions is generally given by financial institutions dependant upon the satisfaction of the identification parameter and/or other parameters as long as that the transaction amount does not exceed the credit limit and/or the membership is still valid and the like. The system of the present invention may operate as a further part of this authorisation process. The system may be associated with the data feed used during the authorisation process and the satisfaction or contravention of the identification criteria communicated to the system administrator may be a further parameter which may be required before authorisation Is given by the financial institution.

In the context of a common credit card transaction, for example, the customer, who is typically the owner of the card, uses the card to make a purchase from a merchant, which is the business accepting credit card payments for products or services sold to the customer. The merchant generally collects the card information, by swiping the card through a reader or similar machine if it is a physical store, or otherwise via the Internet or telephone.

As the merchant will wish to verify, for example, that the card Is valid and the credit card customer has sufficient credit to cover the purchase, electronic verification is conducted using a credit card payment terminal, Point of Sale (POS) system or like with a communications link to the merchant's acquiring bank. Data from the card is obtained from a magnetic stripe or chip on the card, a chip on a customer device, or is provided by the customer in an online form or verbally over the telephone.

The acquirer, ie the financial institution or other organisation that provides card processing services to the merchant, contacts the card issuer via the card association, ie a network such as VISA or MasterCard (and others) that acts as a gateway between the acquirer and issuer for authorising and funding transactions.

The issuer, preferably before authorising and funding the transaction, forwards the request to the system of the present invention for authorisation from the customer.

It is to be appreciated, that such customer authorisation requests are not limited to payment systems involving credit cards, but may be equally applied to financial transaction systems involving debit cards, funds transfers between accounts, share purchases, etc, or for example, when accessing secure systems across a network and a request for the purpose of authorising the remote system access is issued.

A complete remote payment system in which the customer authorisation request Is received and processed directly by the system is also envisioned and described in detail below.

Importantly, regardless of the manner in which the contact for payment is made using the system, the substantive portions of the authentication and validation processes will preferably take place beginning with the system contacting the designated RCD of the customer and preferably using an interactive voice response (IVR) system or similar system to verify the identity of the customer. The authentication process may Include one or more factors and methods of contact with the customer and authentication including, but not limited to, IVR systems, biometric information relating to the customer such as voice recognition in particular, code entry from one or more sources along one or more communications channels, generated codes, Radio Frequency ID (RFID), one time only codes or the like.

Two-factor authentication may be used in an attempt to overcome newer forms of fraud, as has using two different communications paths. For example, the system may communicate a challenge to the customer cell phone via SMS and expect a specified reply. If it is assumed that all of the bank's customers have cell phones then this results in a two-factor authentication process without extra hardware. Multifactor authentication will typically involve the use of more than one communications channel or sessions wherein a challenge can be issued on a first channel and, the customer response or second authentication piece is communicated over a different communications channel or different communications session than the first, requiring the customer to have access to both In order to comply, making eavesdropping much more difficult. The communications channels will typically be directed to a particular RCD which itself will normally have unique Identifying information which will also be required to match or correlate the customer verification information stored by the system before authentication is granted.

The system uses the authentication request as the basis for contacting the customer via the customer's at least one RCD using a data entry prompt. The data entry prompt may be a message requesting the input of particular private identification (private ID) information such as a code or other verification data, an original entry of which is created by the customer or generated when the customer's account are initially linked to the system and which may be changed as required.

Information relating to one or more private IDs, and one or more RCDs of the customer are stored by the system, but kept separate from the account information of the customer which is maintained by the systems of the relevant institution. The information relating to a particular customer in the system and the systems of the financial institution using a unique security identifier (Security ID) which does not necessarily relate to an identifying characteristic of the customer or the customer's RCD, and not even required to be provided to the customer.

The system compares the private ID Information received from the customer, or aspects of the information provided, pursuant to the data entry prompt, to the private identification data maintained by the system for verification purposes. Advantageously, the respective private identification data from the customer and that stored by the system are secured with encryption mechanisim such as hashing.

The most preferred form of contact with the customer for authentication purposes is the system using an interactive voice response (IVR) component, which Is a computerised system that allows a person, typically a telephone caller, to select an option from a voice menu and otherwise interface with a computer system. Generally the system plays pre-recorded voice prompts to which the person presses a number on a telephone keypad to select the option chosen, or speaks simple answers such as "yes", "no", or numbers in answer to the voice prompts.

The latest systems use natural language speech recognition to interpret the questions that the person wants answered. The newest trend is Guided Speech IVR which integrates live human agents into the design and workflow of the application to help the speech recognition with human context. IVR developed as a telephony system but similar systems are now available that function on non-telephony systems and any functionally equivalent system or combinations of systems can be used.

Typically, an IVR component is Included In the at least one communication means and upon the data processing architecture receiving an authentication prompt, the IVR component will typically contact the customer using their preferred remote communications device (RCD). The RCD is likely to be a mobile telephone or similar and the IVR system can then guide the customer through the entry of their identification information to be used in the authentication process. Importantly, the communication means of the system will also typically have the ability to determine the identification characteristics of the particular remote communications means used, such as SIM card numbers or IP addresses, or digital certificates and the like in order to identify the customer according to a multifactor authentication process.

If the verification data entered, matches or correlates to the verification data on file, then the customer is considered to be validated for authorising the transaction. If the verification data entered, does not match or correlate to the verification data on file, then the customer is considered not to be validated and is rejected from the system.

The invalid entry of verification data may also flag a follow up from the system administrator. Preferably, once invalid verification data is entered a predetermined number of times, which may be at least once but preferably no more than three times, that customer may be locked out of the system for a period of time. The lockout may be active on the customer account(s) or may be limited to lockout of access to the system from the particular remote communications means used by the customer as determined using the identification characteristics of the particular remote communications means used.

Once authentication is granted or declined, an appropriate indication is provided to the relevant financial institution(s) and a suitable message advising the customer of the outcome of the authentication process is preferably generated by the data processing architecture and forwarded to the customer's preferred RCD.

### BRIEF DESCRIPTION OF THE INVENTION

Preferred embodiments of the present invention will now be described with reference to the accompanying drawings, in which:
Fig. 1 is a context diagram providing an overview of a preferred embodiment of the Invention;
Fig. 2 Is a flowchart outlining the setup process of a preferred embodiment of the invention;
Fig. 3 Is a flowchart outlining the authorisation process of a preferred embodiment of the invention;
Fig. 4 is a flowchart outlining the device changing process of a preferred embodiment of the invention;
Fig. 5 Is a flowchart outlining the customer identifier changing process of a preferred embodiment of the invention;
Figure 6 is a context diagram providing an overview of a remote payment system Incorporating a preferred embodiment of the present invention;
Figure 7 is a flowchart outlining a customer registration process of a remote payment system incorporating a preferred embodiment of the present invention;
Figure 8 is a flowchart outlining a website registration process of a remote payment system incorporating a preferred embodiment of the present Invention;
Figure 9 is a flowchart outlining a customer authentication process of a remote payment system incorporating a preferred embodiment of the present invention;
Figure 10 is a flowchart outlining a first deposit process of a remote payment system incorporating a preferred embodiment of the present invention;
Figure 11 Is a flowchart outlining a purchase process of a remote payment system incorporating a preferred embodiment of the present invention;
Figure 12 is a flowchart outlining a funds transfer process of a remote payment system incorporating a preferred embodiment of the present Invention; and
Figure 13 is a flowchart outlining a balance enquiry process of a remote payment system incorporating a preferred embodiment of the present invention.

### DETAILED DESCRIPTION OF PREFERRED EMBODIMENT

The present Invention Is not specific to any particular hardware or software implementation, and is at a conceptual level above specifics of implementation. The following is provided to assist in understanding the practical implementation of particular embodiments of the invention.

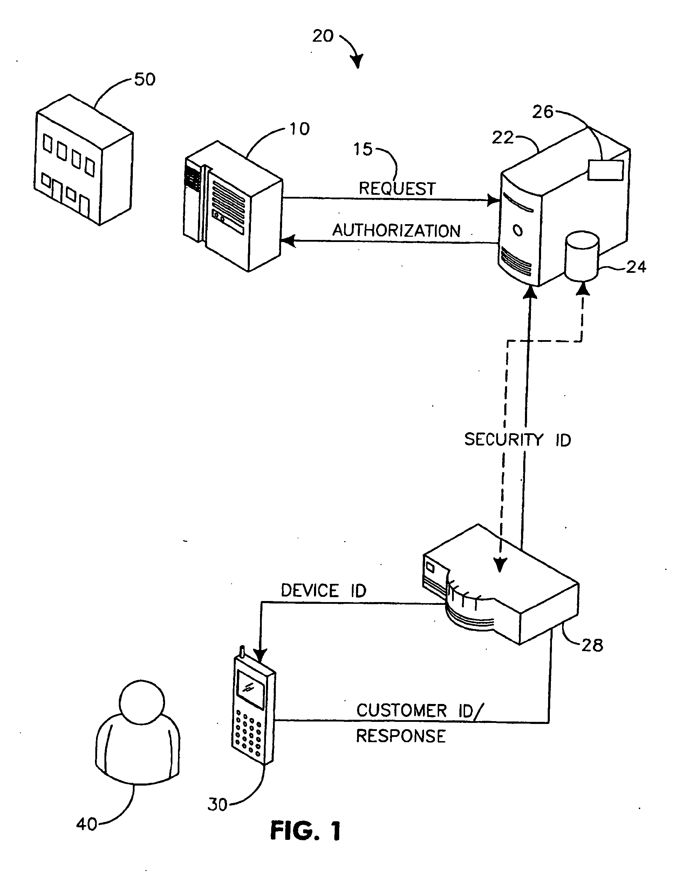

The authorisation system 20, as shown in Fig. 1, includes a data processing means, ie server 22, with communication means 26 which communicates with an institution system 10 of an institution 50 and a customer device 30 of a customer 40. The customer 40 is generally a customer of the institution 50, but may be an employee, supplier, citizen relating to a government agency or similar. In various circumstances, therefore, the customer 40 may be identified by the institution system 10 using any form of public identification data (Public ID), such as an account number, credit/debit or other card number, employee number, login name, password, or other suitable identifier. In some instances, a combination of these identifiers may be used as a Public ID.

Identification information relating to, for example, the institution 50, the customer device 30 and the customer 40, are securely stored in database 24 of the authorisation system 20. The database 24 may take any one of several forms, for example, a single central database, a distributed database or a number of secure databases.

It will be appreciated that while the authorisation system 20 is discussed in the context of a financial institution, such as a credit card issuer, the institution 50 may be any organisation requiring secure authorisation of a transaction. Examples of such institutions include an employer, bank, government agency, share broker or any other entity which is seeking secure identification or authorisation.

It will also be appreciated that while the authorisation system 20 is discussed in the context of a financial transaction, the transaction may take other suitable forms, such as for example, a request for identification of the customer 40. Examples of transactions requiring authorisation by the authorisation system 20 include an online or over the counter financial transaction, a request to approve a share purchase or sale, or a request for identification which may be required for the customer 40 to enter a building, open an account, ordeal with an institution or government agency.

In one form, the authorisation system 20 and the institution system 10 may be hosted in the same secure environment to minimise the chances of communications between them being intercepted by an unauthorised party or if the authorisation system 20 is being incorporated by the institution 50 into their own secure processing layer.

However, where the authorisation system 20 and the Institution system 10 are hosted in separate physical environments, communications between them should preferably be facilitated via a secure link such as a direct connection, preferably utilising 'off-net' (ie non Internet or web based) technologies such as a frame or a secure point to point connection. Where the authorisation system 20 and the institution system 10 communicate via the use of 'on-net' technologies, strong authentication and encryption methods, such as VPN tunnelling with challenge authentication or similar technology such as Client/Server certificates, should preferably be used. In such cases, it is preferred that the data communicated across the connection is encrypted with a minimum encryption of 128 bit. Additional security may be provided by authenticating the data packages using a HMAC (Keyed-hash Message Authentication Code) algorithm in which the institution system 10 is provided with a secret key and all information sent by the institution system 10, is hashed against the key to authenticate the data. Furthermore, additional security layers for transmitted data can be also be added if required, such as for example encryption hardware.

It is preferred that changes to the authorisation system 20 should be automatically logged and maintained within a secure audit trail which cannot be changed even at a privileged or administration access level, and should be available in a report format.

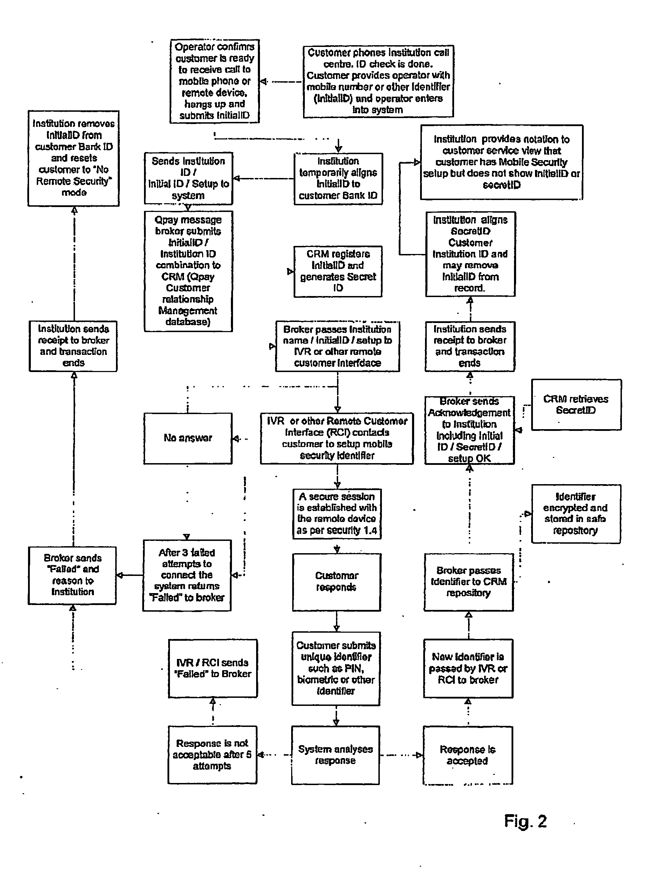

Whether the authorisation system 20 and the institution system 10 are securely co-located or securely connected remotely, a unique security identifier, hereinafter referred to as the Security ID Is used to correlate the information relating to the customer 40 in both the authorisation system 20 and the institution system 10, once the setup procedure, as shown in Fig. 2, has been completed for a new user. The Security ID negates the need to constantly transmit identification information about the customer 40 or customer device 30 (discussed below) which may be more easily recognised by third parties.

In this way the account information of the customer 40, stored in the institution system 10, is kept substantially independent from the authorisation system 20.

In other words, the use of the Security ID ensures that if eitherthe authorisation system 20 and the institution system 10 Is successfully attacked and the records of the customer 40 are accessed by an unauthorised party, there Is minimal opportunity for the attacker to obtain the full set of information, and more specifically, identifiers required to complete a transaction, which are discussed in further detail below.

In order to maximise the security of the communications and Information stored within the database 24, it is preferred that the Security ID is not visible to the customer 40, or the call centres for the institution 50 or the authorisation system 20.

So as to facilitate correlation of the transmitted data with the data stored by the institution system 10, the Security ID may be correlated in a secure manner to an existing unique identifier used by the institution system 10, such as for example, an account number of the customer 40. Similarly, the Security ID may be correlated in a secure manner to a unique identifier within the authorisation system 20, which is visible to call centres, etc.

During the customer setup process in the system 20, the Institution 50 passes the Device ID to the system 20. The system 20 contacts the customer 40 (via the device 30) 'off-net'. At this point the customer 40 is able to follow the required steps to establish at least one Customer ID. The system 20 then passes back to the Institution 50 the Device ID, and a new unique security identifier (Security ID). Thereafter, the only identifier relating.to the customer 40 and/or the device 30, which passes between the Institution 60 and the system 20, is the Security ID.

Therefore, for a fraudulent user seeking to gain unauthorised access to a complete dataset, would need a customer's 40 Public ID, the Device ID and the Customer ID. To gain all this information, they would need to attack and gain unauthorised access to the Institution system 10, follow a transaction to the authorisation system 20 and attack the link between the system 20 and the customer device 30. Thereby, in an example set in the banking context, the unauthorised user would need to attack and gain unauthorised access to the bank, the authorisation system 20 and the mobile phone network on which the device 30 is connected.

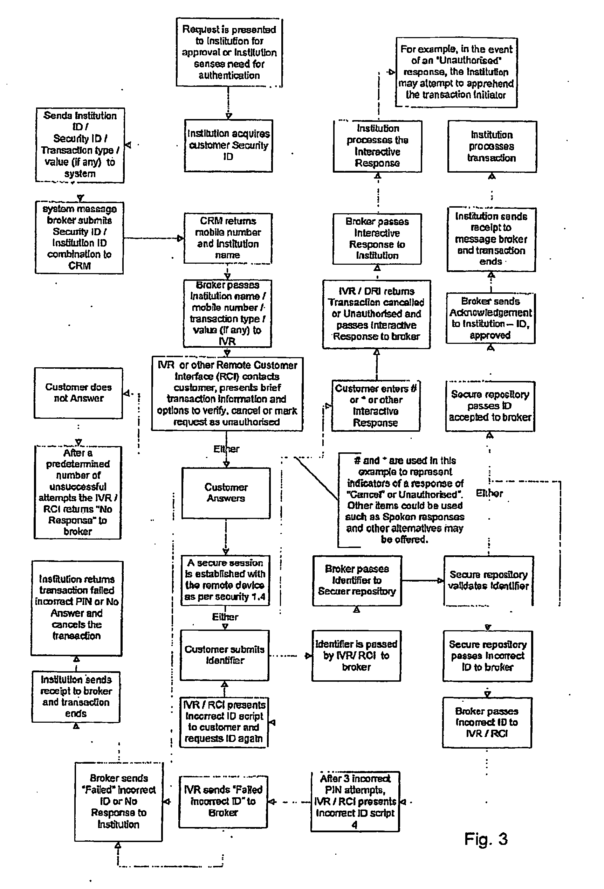

In a typical financial transaction situation, as shown in Fig. 3, the merchant or similar organisation will request the institution 50 for authorisation of the transaction. In some cases, where such authorisation is not requested by the merchant or where the transactions are internal to the institution 50, the institution 50 may itself request authorisation of the transaction. It Is as this point that the Institution system 10 sends an authorisation request 15 to the authorisation system 20, which in turn contacts the customer 40 for authorisation of the transaction.

Where the authorisation system 20 is connected to a number of institutions and/or institution systems, the authorisation request 15 may Include a unique identifier to identify the institution 50, hereinafter referred to as the Institution ID, which is communicated to the authorisation system 20 with the authorisation request 15. In situations, for example, where the institution 50 hosts the authorisation system 20, the Institution ID may not be necessary. Also, it will be appreciated that the Institution ID may be in different forms such as the internet protocol (IP) or media access control (MAC) address of a server, or a combination of identifying numbers and/or letters.

The customer 40 is contacted by the authorisation system 20 on the customer device 30. The customer device 30 may be a handheld device such as a mobile phone or personal data assistant (PDA), or a portable computer such as a laptop. It is intended that the customer 40 is contacted on a portable device carried with the customer 40 as this will ensure that transactions can be authorised as required and without unnecessary delay.

It is preferred that the communication with the customer device 30 is conducted over an off-net communication network (ie non-internet or web based technology), particularly in situations where the transaction itself has been conducted over the internet or web. In this way, even if the transaction session is compromised, the authorisation process remains secure as it is carried out over a different communication network and is therefore unlikely to be also compromised. Also, where a communication network, which is the same as the one over which the transaction is conducted, is used, the authorisation process may be conducted over a separate session to the transaction session, or may itself be affected over more than communication session.

In order to establish a secure communication session between the authorisation system 20 and customer device 30, suitable security measures are adopted. The exact nature of these security measures will of course be determined by the type of device, the connection method used and the network type.

For example, In the case of a GSM mobile phone, a 128-bit Ki within the mobile's SIM is used to uniquely identify the device to the network. A 128-bit random challenge (RAND) is provided by the network with the device then providing a 32-bit response (SRES). A 64-bit ciphering key (Kc) creates a basis for encryption during the session, Underlying algorithms include A3 (authentication), A5 (Encryption) and A8 (Key Generation), and other security layers as required.

In the case of a CDMA device, the electronic serial number and an A-key programmed into the phone are used to uniquely identify the device to the network. A random binary number (RANDSSD) is generated by the network with the device responding with a required 128-bit sub key called a Shared Secret Data (SSD). Part of the SSD is used for authentication, and part for encryption, and underlying algorithms may include standard CAVE, CMEA, E-CMEA, or ORYX in the case of data. In addition to the foregoing, CDMA2000 and WCDMA can be used to apply additional layers of security such as SHA-1, AES, the Kasumi and Rijndael algorithms and the AKA protocol.

In the event that Wi-FI (802.11 base technology), Bluetooth® and other Near Field Communication technologies, as well as long range communication technologies, are used to communicate with the customer device 30, it is preferable to implement strong security practices available with such technologies.

In order to identify the customer device 30 to the authorisation system 20, a unique device identifier, hereinafter referred to as the Device ID, of the customer device 30 may be compared to the Device ID provided by the customer device 30. Examples of such identifiers include a phone number, an International Mobile Equipment Identity (IMEI) which Is a number unique to every GSM and UMTS mobile phone, IP or MAC address, or any other form or combination which uniquely identifies the customer device 30 to the authorisation system 20.

It will be appreciated that is some cases, for example, where the Device ID includes a phone number, the information therein will be used to also intitate a communication with the device 30. However, where the Device ID consists only of devices identifiers such as a MAC address, which in themselves are not able to be utilised to initiate a communication with the device 30, additional contact information for communicating with the device 30 may also stored by the system 20.

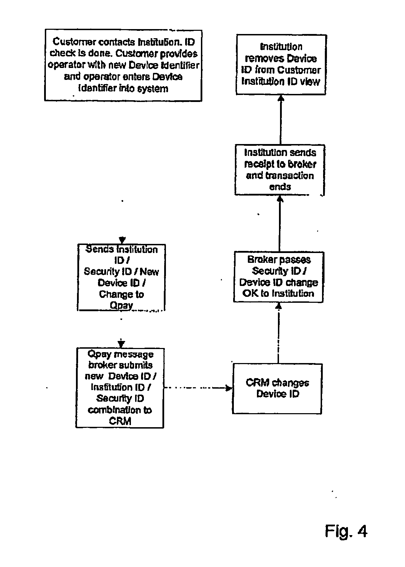

The authorisation system 20 provides a procedure, as shown in Fig. 4, for changing the Device ID stored in database 24, for example, if the customer 40 obtains a new customer device 30.

In order to authorise the transactions, the customer 40 is prompted by the authorisation system 20 to provide at least one unique customer identifier, hereinafter referred to as the Customer ID, which is used to ensure it is the actual customer approving the transaction, and not another person who simply may have access to the customer device 30. Ideally, the Device ID and the Customer ID are separately secured and may undergo encryption processes such as hashing during storage and/or communication.

The Customer ID may be a personal identification number (PIN) or password/pass-phrase which is known to the customer 40, a biometric identifier such as a voice print, a secret word, a fingerprint, or any other form of identifier which would usually only be known to, or accessible by, the customer 40.

In a preferred form, an interactive voice response (IVR) system, ie IVR system 28, may be used to both prompt the customer 30 for the Customer ID and subsequently receive the Customer ID. An IVR is a computerised system that allows the customer 40 to select options from a voice menu and otherwise interact with the authorisation system 20. Generally the IVR system 28 plays a pre-recorded voice prompt and the customer 40 presses a number on a telephone keypad to select an option and/or speaks an answer, such as the Customer ID, which is recognized by the IVR system 28.

For example, a Customer ID which includes a 4 (or 6) digit PIN, is not known or stored by authorisation system 20 in a digitised usable form. When the IVR system 28 receives the PIN via DTMF within the session associated with the call, it is encrypted in the session using MD5, and it is only this hash encrypted MD5 string, which is associated with the PIN, that is communicated back to the authorisation system 20 for validation or storage. This procedure ensures that in the unlikely event that the authorisation system 20 is attacked, and the attacker is able to break the encryption that relates the Customer ID to the Device ID, they would not be able to simulate an authorisation call in an attempt to obtain the PIN in usable form for an IVR system unless the MD5 encryption is reversed. Furthermore, additional security layers for data can be also added if required, such as for example encryption hardware.

In an alternate embodiment, which utilises voice biometrics, the Customer ID is formed by the voice print of the customer 40. This voice print may be calculated by asking the customer to repeat a randomly generated word or phrase such as "Yellow" which allows the voice print of the customer 40 to be captured. Preferably, a future authorisation request will request the customer 40 to say a different word or phrase such as "Tuesday" for enhanced security.

In this way, the authorisation system 20 determines the biometric voice print from the response and compares it to the stored data. As another layer of security, the system 20 may also perform a voice to text conversion of the word or phrase and make a further comparison with the stored data to confirm that the word spoken Is in fact the one recorded. Thereby, to be broken, a user seeking unauthorised access would require not only a high quality recording of the customer's voice, but would also need to use that recording to say the random word requested.

In another alternative embodiment, the system 20 may ask the customer 40 a question to which he or she Is likely to know the answer. For example, the system 20 may ask "How much was your last transaction?" or "What is your middle name?". The customer's 40 response is compare not only against the stored voice print data but the accuracy of the response is also determined.

Once the Customer ID is provided by the customer 40, the transaction may be considered by the authorisation system 20 as being authorised. Accordingly, the authorisation system 20 communicates the authorisation of the transaction to the institution system 10, which will in turn allow the institution 50 to take the appropriate actions to conclude the transaction.

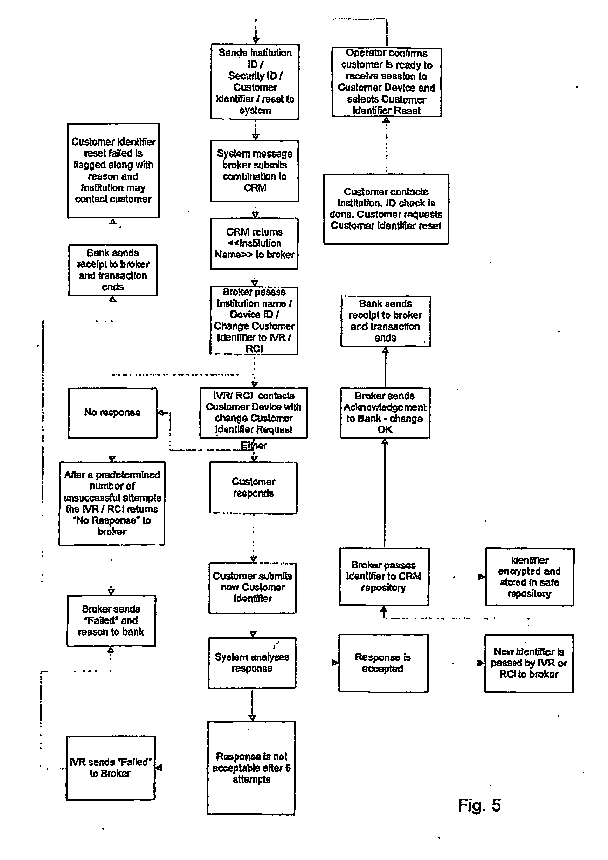

The authorisation system 20 provides a procedure, as shown in Fig. 5, for changing the Customer ID stored in database 24, for example, if the customer 40 needs to change his or her password, PIN, etc.

In certain situations, the customer 40 may need to provide a response to the authorisation system 20, either instead of, or in addition to, the Customer ID. This response may be used to communicate a request to cancel the transaction or flag the transaction as fraudulent, for example. In such situations, the authorisation system 20 communicates the fact that the transaction may be fraudulent to the institution system 10, which will in turn allow the institution 50 to take the appropriate actions to cease the transaction and stop the transfer of funds.

It is preferred that the Customer ID and the Device ID are stored by the authorisation system 20 in a manner that separates them, for example by the use an encrypted algorithm. This is to ensure that in the unlikely event.an attack on the authorisation system were successful; the attacker could not correlate the Customer ID and the Device ID, and subsequently emulate authorisation of a fraudulent transaction. In one form the Customer ID is stored separately In a triple fire-walled subset within the authorisation system 20 environment.

It is also preferable that the Customer ID is not stored or copied elsewhere during the transaction authorisation process. This may require the facilitation of a pass-through in the IVR system 28 as opposed to a store and validation method.

According to a particularly preferred embodiment, a remote payment system 100 incorporating the authorisation system 20 is provided.

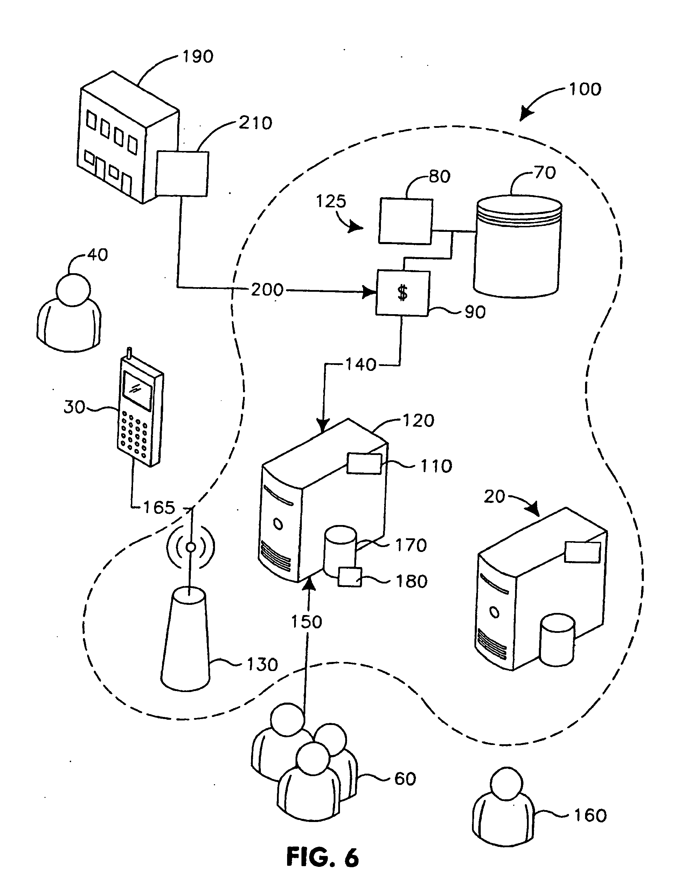

The functionality and use of one implementation of the system 100 Is illustrated in Figures 6 to 13. The remote payment system 100 allows a customer 40 to transact payments for goods and services remotely in a secure manner with members 60 of the system 100. The preferred implementation of the system 100, according to which the uses of the system 100 are illustrated in Figures 6 to 13, includes at least one data storage means 70 for containing updateable data relating to each customer 40, and each member 60 of the system 100, wherein each customer 40 has at least one associated registry profile 80 with a related monetary reservoir 90. The system 100 also includes a data processing architecture 110 having at least one data processing means 120 and a clearing house system 125 for settling Indebtedness between members 60 and customers 40 of the system 100, at least one communications means 130 associated with the data processing architecture 110 for communicating with a customer 40, and at least one remote communications device 30 held by each customer 40 for communicating with the communication means 130.

The customer 40 uses the system 100 to transact payments 140 for goods or services pursuant to a payment request 160, the payment request 150 triggering a communications event 165 from the at least one communications means 130 to the at least one remote communications device 30 for the purpose of validating the customer's 40 identity and access to the respective registry profile 80, and once the customer's 40 identity has been validated, allowing the customer 40 to transact payments 140 provided a positive balance remains in the monetary reservoir 90.

There will typically be at least two categories of membership of the system, namely business members 60 and customer members 40. There will typically be a plurality of members in each category of membership. Membership of the business member 60 category may be controlled strictly and/or limited by the system administrator 160. Membership of the customer member 40 category may be provided after an application process which may be subject to approval by the administrator 160. Importantly, business members 60 of the system 100 may be customer members 40 of the system 100 as well.

The system administrator 160 will typically offer membership to the business members 60 and the customer members. The membership may require a subscription. Business members 60 may generally pay an annual subscription fee which will allow them access to the system 100. The business members 60 may be provided with a unique identification number and password for Identification purposes. The business members 60 may receive regular bulletins and updates about the system 100, as well as results of data analysis performed on the information relating to the system 100. These bulletins may be prepared by the system administrator 160. Typically, information such as this will relate to the program and its benefits, advertising of the program or the like. The system administrator 160 may compile a database 170 containing the details of the business members 60 and any other information or statistics that the system administrator 160 desires.

The business member 60 may collect and/or update information on the customer members 40 of the program that use the system 100 to pay for goods or services of the business members 60. This information may be communicated to the system administrator 160 and may be stored on the customer database 70.

There may preferably be two portions or sectors of the system. The two portions of the system may preferably be known as the front end and the back end. The front end may preferably comprise a user interface. The user interface allows a subscriber or database administrator to access or connect to the back end of the system 100. The front end or user interface may preferably be located or accessible using an Internet browser or mobile telephone, PDA or other personal device with communications ability. Alternatively the user interface may be located on a computer or server or a network of computers or servers. It may be of any suitable type or configuration.

The back end of the system 100 may preferably include at least one data storage means typically a plurality of databases. At least one of the databases may preferably be a customer database 70, containing Information about customers 40 and their associated monetary registry 90, and the second database may preferably be a business member database 170, containing information about business members 60 and their accounts 180. Access to each of the databases via the user interface may preferably be differentiated depending on the access or login details. For example access by a customer 40 may allow only particular or restricted functions to be performed, which may be restricted in a manner similar to the access granted to customer members 40 but with the same or different functionalities whereas access by the system administrator 160 may grant "superuser" status and allow access to all portions of the system 100 and all functions of the system 100.

Typically, a potential member may contact the system administrator 160 In order to subscribe to the system 100. The system administrator may suitably provide the member with a unique username and password to allow access to the system. The member may preferably pay the system administrator 160 a subscription fee In order to access the system 100 for a preset period of time. The username and password may include a Personal Identification Number, an account number, or the username may be linked to identification characteristics of the remote communications means used and the identification characteristics of the particular remote communications means used by the customer 40 may differ according to the type of the device 30 used. For example, computers using hard wired internet connections may use ID means such as Caller Line Identification (CLI) technology, mobile telephony services may allow SIM card identification characteristics to be used and direct internet access to the interface may use the network address or internet protocol address, preferably validated through a service provider as a username.

The above discussion is based around a mobile telephony or computing device. The system 100 can also be used over the Internet for example. Upon opening the predetermined web page, the customer 40 may suitably be prompted to enter their username and password in order to access the system 100. The correct entry of a customer 40 username and accompanying password may preferably allow access to the system 100 as a customer 40.

Use of the system 100 by business members 60 may be slightly different to that of customer members 40. Business members 60 will preferably use the system 100 to notify customers 40 of pending payment requests 150 and to monitor their own account 180 balance. The system 100 may also allow a business member 60 to produce accounting statistical records from the system 100 information.

Use of the system 100 by the system administrator 160 may also preferably be accessed through the front end user interface. In a manner similar to a customer's 40 entry of their username and password, the administrator 160 may also have a username and password, entry of which may suitably allow broader on unrestricted access to the system 100 than that allowed to a customer 40.

The correct entry of the administrator 160 username and accompanying password may preferably allow access to the system 100 as the database administrator. The administrator 160 will preferably have the ability to maintain the system 100, including amending the customer registry profiles 80 and virtual wallets 90 to correct errors and also generate reports from the system 100.

Customers 40 may have the option to update their identification details or contact details via, for example, a web interface. Upon selecting the option to modify the customer's 40 details, an editable form is preferably displayed allowing the customer 40 to edit their account details. This may allow the modification of the details such as username, password, contact name and address details including telecommunications numbers, e-mail and customer web site address. Change of Identification information in this manner will typically trigger the authentication process to be carried out again.

Specific preferred features of the system 100 are more easily described with respect to use of the system 100 by a customer 40 or business member 60, or by the administrator 160.

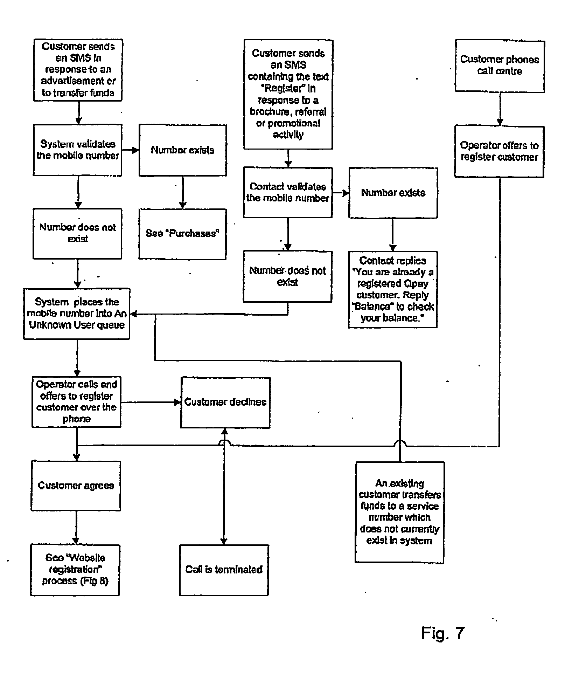

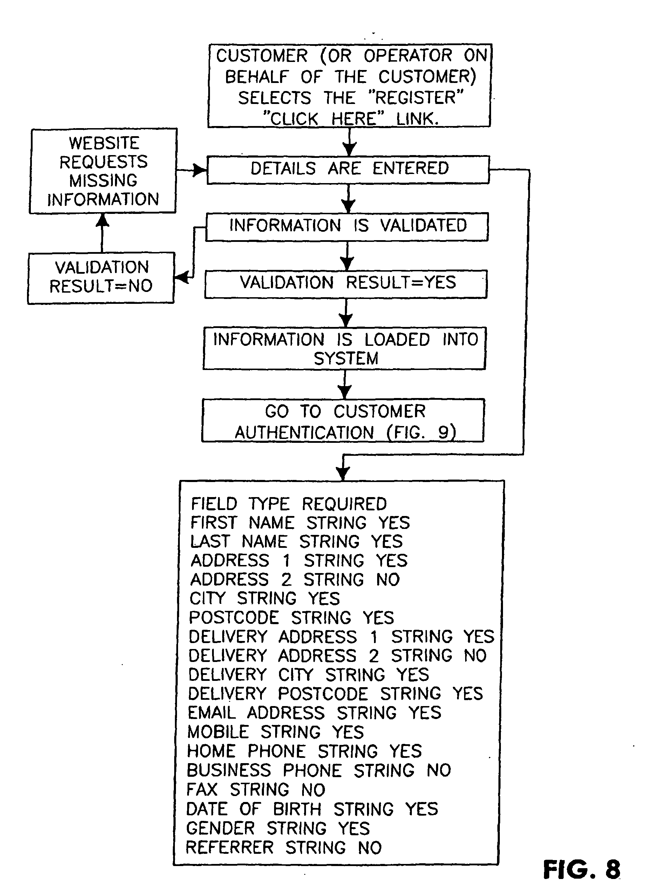

The first step in the system 100 will generally be to establish a new customer 40 registry profile 80. The events which can initiate a New Customer Registration together with a preferred process for dealing with the events are identified in Figure 7. The front end of the system may preferably be reached using an Internet browser to visit a predetermined web site address. This may be performed by either the customer 40 directly using the internet Interface or by contacting a customer service officer (CSO) of the system 100 by other means and the CSO using the internet interface to enter the customer 40 details required for Initial validation of the customer 40. The preferred Implementation of the actual process of New Customer Registration is illustrated In Figure 8.

Upon selecting the option to enter the customer 40 details, an editable form is preferably displayed allowing the customer 40 (or CSO) to enter (or edit) their subscription details or account details. This may allow the modification of the details such as usemame, password, contact name and address details including telecommunications numbers, e-mail and customer 40 web site address. It may also include other background data such as date of birth, referrer and bank details. If any of the identifying information entered is already in use or piece of information are missing, a prompt may be issued to request the information or correction of the information.

Once the customer's 40 identification information has been validated by a preferred primary validation procedure, the information entered may be used to create a customer 40 registry profile 80 and monetary reservoir or "virtual wallet" 90.

Funds for use in the system 100 of the present invention are typically transferred into the customer's 40 virtual wallet 90. The transfer of funds may be from a debit account 210 with an established financial service provider 190 such as a bank, building society or other or from a credit facility offered by a provider 190. Preferably, at this stage, the preferred source for the transfer may be nominated by the customer 40 but not processed.

This may be followed by a second authentication procedure typically following a secondary vetting procedure by the system administrator 160 as well as a more thorough check of the information provided which may require confirmation from parties independent of the system administrator 160.

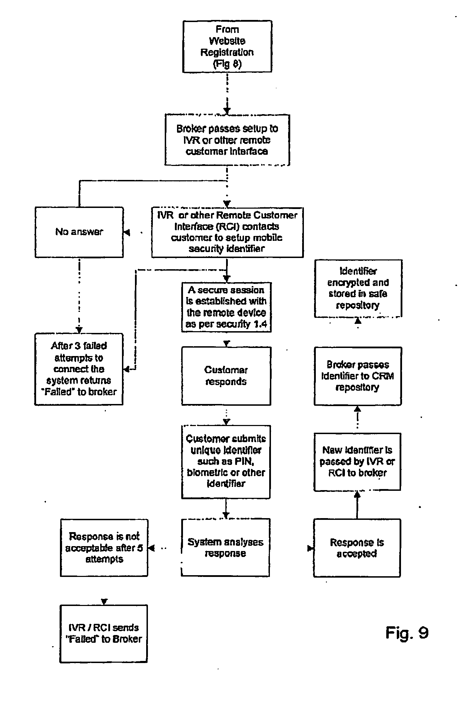

Once the customer 40 advises the system 100 of the preferred source for the transfer, the customer 40 may then be asked to follow an authentication procedure to authenticate their identity, validity of access to the system 100 and to the source account 210 for the transfer or similar. A preferred implementation of the authentication process is illustrated in Figure 9.

The authentication procedure may include the data processing architecture 110 creating an authentication prompt and communicating the authentication to the at least one communication means 130 associated with the data processing architecture 110.

The validation and authorisation for the payment 200 is performed using the authentication system 20 outlined earlier. Again, once authentication Is granted or declined, a suitable message advising the customer 40 of the outcome of the authentication process will preferably be generated by the data processing architecture 110 and forwarded to the customer's 40 preferred remote communications device 30 via the at least one communication means 130 associated with the data processing architecture 110.

If the authentication process is successful, the payment 200 is recorded by the system 100 and the customer's 40 virtual wallet 90 updated to account for the payment 200 and to accurately reflect the funds available to the customer 40 through the system 100.

A post-start-up funds transfer to top up their virtual wallet 90 or balance enquiry or other transaction types will also typically be possible. Each transaction will typically be subject to the authentication process including contacting the customer 40 by the system 100 and the request for validating information.

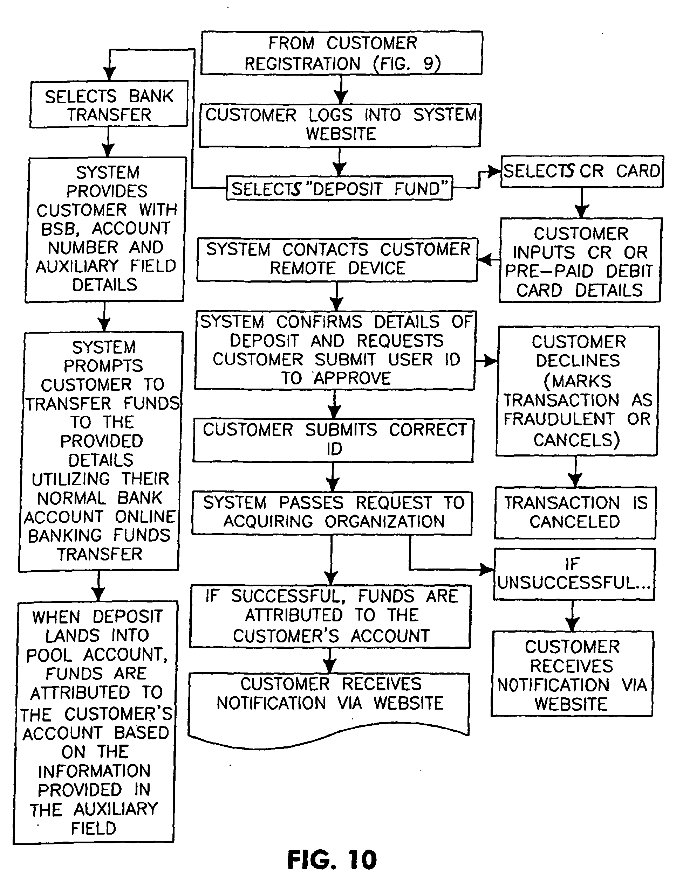

Once the customer's 40 identity has been validated, the customer 40 will typically be prompted to transfer start-up funds into their virtual wallet 90 for use under the system 110. In this case, the customer 40 will typically follow a first deposit procedure, a preferred implementation of which is illustrated in Figure 10. The funds transfer may differ depending upon whether the customer 40 is using a debit or a credit facility. If a credit facility is used, the system 100 may function on a real-time basis, drawing down the credit card information and processing the credit card payment on demand whereas if a debit facility is used, the customer 40 may transfer funds into their virtual wallet 90 for use immediately or at a later time.

Following the prompt to transfer start-up funds, the system 100 still using the IVR component 28 and generally on the same contact as the authentication contact, will request that the customer 40 designate the amount to be transferred. The system may then process this request with the customer's 40 nominated financial institution 190 and account and Issue a successful/unsuccessful notification to the customer 40. The customer 40 contact with the IVR component 28 may be terminated at that stage or the system 100 may question whether any further activity is to be undertaken by the customer 40. If the transfer is successful, the payment 200 is recorded by the system 100 and the customer's 40 virtual wallet 90 updated to account for the payment 200 and to accurately reflect the funds available to the customer 40 through the system 100.

Typically, for balancing the processing load on the system 100, the customer 40 transactions and updates to the respective virtual wallets 90 may be conducted in real-time but the updating of transfer of funds to the business members 60 of the system 100 may occur in lull periods in the system 100. The update of funds transfers to business members 60 may occur in bulk "squirts" wherein a single amount may be transferred to a business member 60 with the appropriate information to identify the customer payers 40. The timing of the lull periods may occur at a particular time each period, typically each day, or the system 100 may be self-monitoring to process transfers to businesses 60 when the processing of customer 40 transfers drops.

Depending upon the outcome of the first deposit procedure, the registry profile 80 and more particularly, the customer's 40 virtual wallet 90 may be "loaded" with an entry indicating the value of funds transferred from the source account 210 into the customer's 40 virtual wallet 90 which can then be used by the customer 40 to make payments 140 to business members 60 of the system 100 at any time.

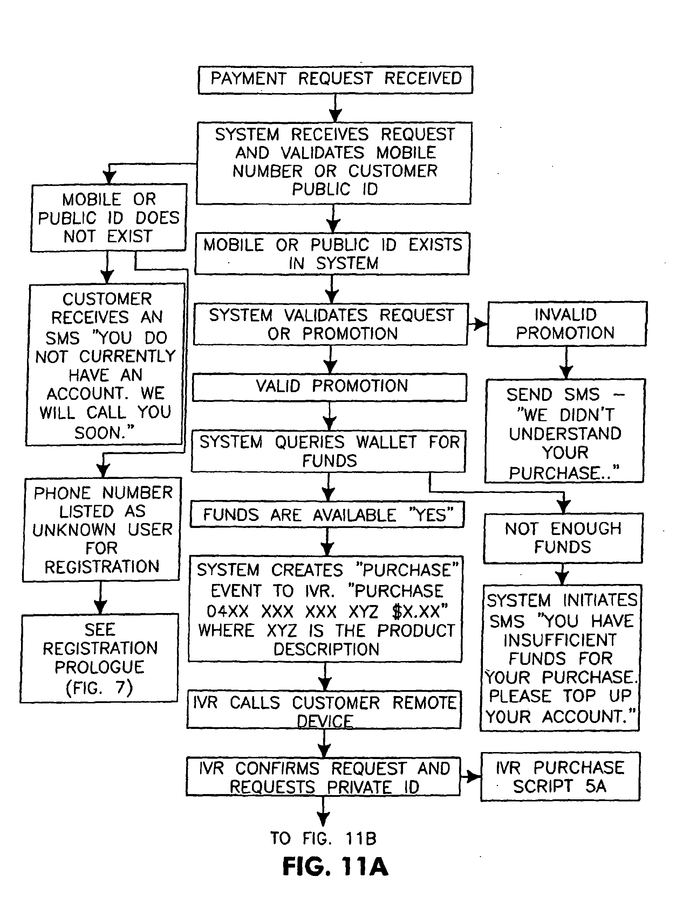

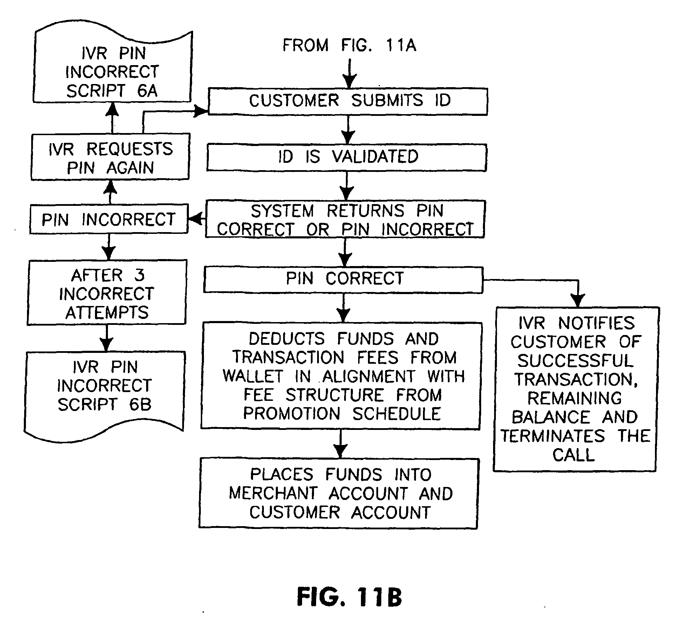

A preferred implementation of the payment process is illustrated In Figure 11. In order to make a payment 140 using the system, a payment request 150 will typically be generated through an interface to the system 100 by a business member 60 (a "pull" operation), a customer 40 (a "push" operation) or by other means and the payment request 150 will preferably be tagged and associated with a particular customer's 40 registry profile 80. The customer 40 will also be notified of the pending payment request 150 either by the business member 60 directly or by the system 100 itself.

Once the payment request 150 has been generated, the customer 40 indicates that payment 140 using the system 100 is to be performed, normally by contact with the communication means 130 associated with the data processing architecture 120. The data processing architecture 120 then typically verifies the details of the payment request 150 and may also verify the customer 40 identity and the availability of funds in the customer virtual wallet 90 and then forwards a prompt to the communications means 130 to contact the customer 40 for the validation or authorisation for the payment 140.

Again, the validation and authorisation for the payment 140 is performed using the authorisation system 20 outlined earlier. Once authentication is granted or declined, a suitable message advising the customer 40 of the outcome of the authentication process will preferably be generated by the data processing architecture 120 and forwarded to the customer's preferred remote communications device 30 via the at least one communication means 130 associated with the data processing architecture 120.

If the authentication process is successful, the payment 140 is recorded by the system 100 and the customer's 40 virtual wallet 90 updated to account for the payment 140 and to accurately reflect the funds available to the customer 40 through the system 100.

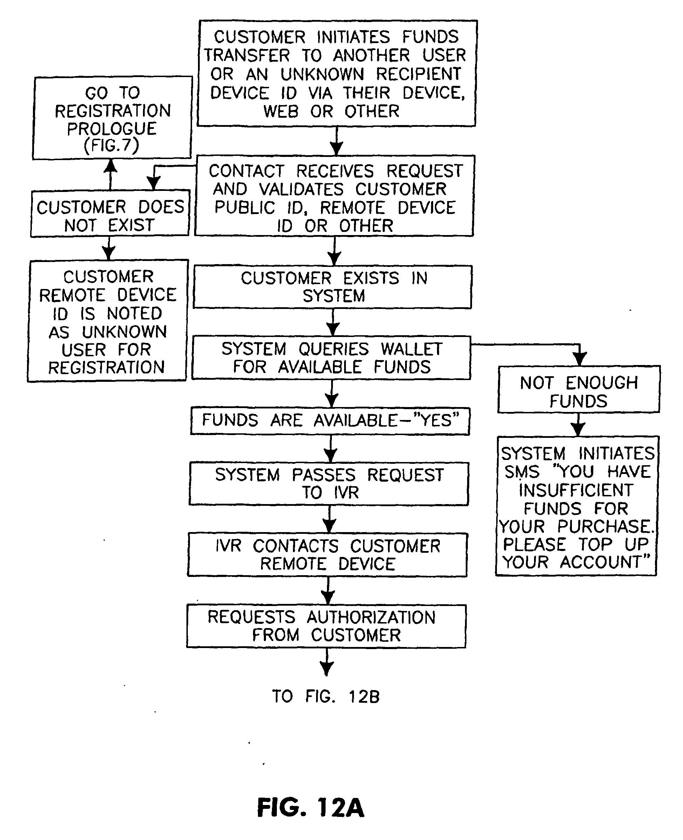

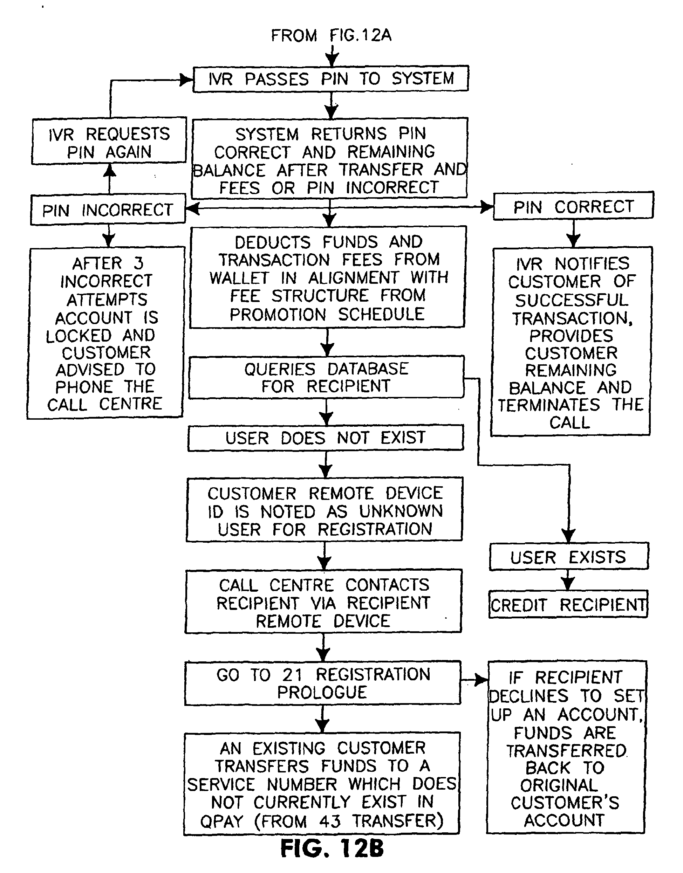

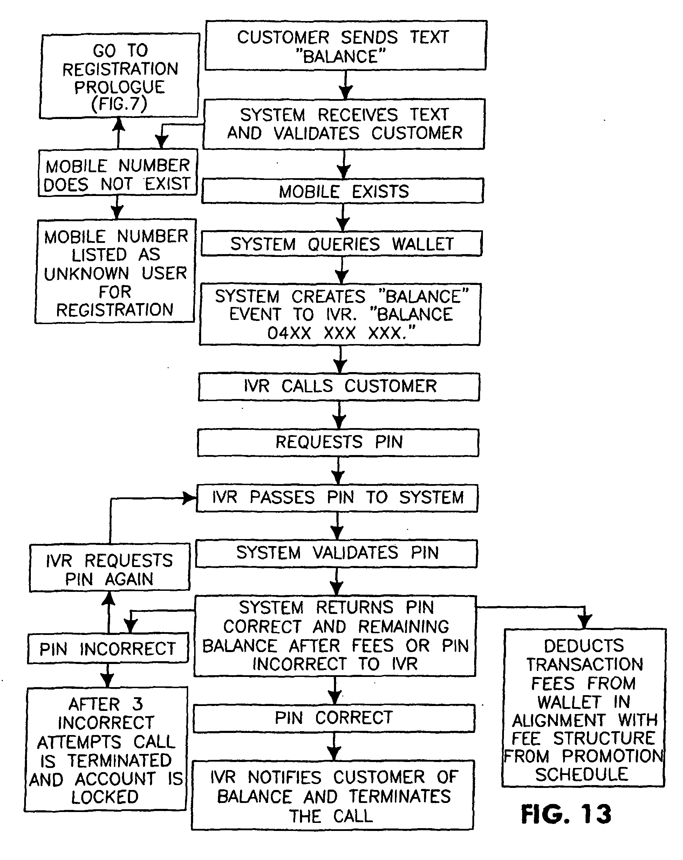

A post-start-up funds transfer to top up their virtual wallet 90 (a preferred implementation of this process is illustrated in Figure 12) or balance enquiry (a preferred implementation of this process is illustrated In Figure 13) or other transaction types will also typically be possible. Each transaction will typically be subject to the authentication process using authethorisation system 20 including contacting the customer by the system 100 and the request for validating information.

In the present specification and claims (if any), the word "comprising" and its derivatives including "comprises" and "comprise" include each of the stated integers but does not exclude the inclusion of one or more further integers.

Reference throughout this specification to "one embodiment" or "an embodiment" means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment.

The foregoing discussion Is considered as illustrative only of the principles of the invention. Furthermore, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A transaction authorisation system (20) for allowing a customer (40) to authorise transactions relating to at least one customer account associated with an institution (50), the system including:
data storage means (24) for enabling access to and storing
(a) customer identification data associated with the customer (40);
(b) device identification data associated with a remote communication device, RCD (30), of the customer (40); and
(c) security identifier data which is known only to the institution (50) and authorisation system (20) associating the at least one customer account with (a) and (b);
a first communication means for enabling communication with the customer (40) via the RCD (30) to authorise a transaction on the at least one customer account;
a data processing architecture including data processing means to identify the customer (40) using (a), identify the RCD (30) using (b) and determine if the transaction is authorised by the customer (40); and
a second communication means for receiving an authorisation request in relation to the transaction and providing an indication to the institution (50) of whether or not the transaction is authorised by the customer (40), wherein the authorisation request received and the indication provided to the institution (50) are referenced to the security identifier data, and wherein the security identifier data is not the same as, nor derived from, characteristics of or personal information relating to the customer (40),
wherein the only identifier relating to the customer (40) and the RCD (30) which passes between the institution (50) and the authorisation system (20) is the security identifier data.

2. The transaction authorisation system of claim 1, wherein the security identifier data is not communicated to the customer (40).

3. The transaction authorisation system of claim 1, wherein the first communication means enables communication with the customer (40) via the RCD (30) utilising a communication medium which is distinct from the communications medium utilised to conduct the transaction.

4. The transaction authorisation system of claim 1, wherein the first communication means enables communication with the customer (40) via the RCD (30) utilising two or more communication sessions.

5. The transaction authorisation system of claim 1, wherein (a) includes one or more of a PIN, a password, pass phrase, or biometric data.

6. The transaction authorisation system of claim 1, wherein the customer (40) is
identified by comparing (a) to a voice print or voice biometric data derived from a verbal response by the customer (40) to a random word, phrase and/or request for information provided by the system, and comparing the verbal response of the customer (40) to the randomly generated word or phrase and/or information accessed by the system.

7. The transaction authorisation system of claim 1, wherein (b) includes one or more of a phone number, an International Mobile Equipment Identity, IMEI, Internet Protocol, IP, address, or Media Access Control, MAC, address.

8. The transaction authorisation system of claim 1, wherein the first communication means allows the customer (40) to indicate if a transaction on the at least one customer account is fraudulent, the data processing means determines if the transaction has been indicated as being fraudulent by the customer (40), and the second communication means provides an indication to the institution (50) of whether the transaction is indicated as being fraudulent by the customer (40).

9. The transaction authorisation system of claim 1, wherein the first communication means includes an interactive voice response, IVR, system.

10. The transaction authorisation system of claim 9, wherein the IVR system provides the customer (40) with at least the options of authorising the transaction, cancelling the transaction or indicating the transaction as fraudulent.

11. The transaction authorisation system of claim 1, wherein the data storage means further enables access to RCD contact information for use by the first communication means in enabling communication with the customer (40) via the RCD (30).

12. A method for allowing a customer (40) to authorise transactions relating to at least one customer account held at an institution (50), the method including the steps of:
a) an authorisation server (20) receiving an authorisation request from the institution in relation to a transaction on the at least one customer account;
b) the authorisation server (20) communicating with the customer (40) via a remote communication device, RCD (30), of the customer (40) to authorise the transaction;
c) the authorisation server (20) identifying the customer (40) using stored customer identification data associated with the customer (40) to which the authorisation server (20) has access, the customer identification data stored in a database (24) of the authorisation server (20);
d) the authorisation server (20) identifying the RCD (30) using stored device identification data associated with the RCD (30) to which the authorisation server (20) has access, the device identification data stored in a database (24) of the authorisation server (20);
e) the authorisation server (20) determining if the transaction is authorised by the customer (40);
f) the authorisation server (20) communicating an indication to the institution (50) of whether or not the transaction is authorised by the customer (40),
wherein the authorisation request received by the authorisation server (20) and the indication provided to the institution (50) are referenced by the institution (50) and the authorisation server (20) to security identifier data for associating the at least one customer account with the stored customer identification data associated with the customer (40) and the stored device identification data associated with the RCD (30), wherein the security identifier data is known only to the authorisation server (20) and the institution (50), and wherein the security identifier data is not the same as, nor derived from, characteristics of or personal information relating to the customer (40), and
wherein the only identifier relating to the customer (40) and the RCD (30) which passes between the institution (50) and the authorisation server (20) is the security identifier data.

13. The transaction authorisation method of claim 12, wherein the security identifier data is not communicated to the customer (40).

14. The transaction authorisation method of claim 12, wherein the communication with the customer (40) via the RCD (30) utilises a communication medium which is distinct from the communications medium utilised to conduct the transaction.

15. The transaction authorisation method of claim 12, wherein the communication with the customer (40) via the RCD (30) utilises two or more communication sessions.

16. The transaction authorisation method of claim 12, wherein the stored identification data associated with the customer (40) includes one or more of a PIN, a password, pass phrase, or biometric data.

17. The transaction authorisation method of claim 12, wherein step c) involves the sub-steps of
i) the authorisation server (20) comparing the customer identification data associated with the customer (40) to a voice print or voice biometric data derived from a verbal response by the customer (40) to a random word, phrase and/or request for information provided by the authorisation server (20); and
ii) the authorisation server (20) comparing the verbal response of the customer (40) to the randomly generated word or phrase and/or information accessed by the authorisation server (20).

18. The transaction authorisation method of claim 12, wherein stored device identification data associated with the RCD (30) includes one or more of a phone number, an International Mobile Equipment Identity, IMEI, Internet Protocol, IP, address, or Media Access Control, MAC, address.

19. The transaction authorisation method of claim 12, wherein the authorisation server (20) determines if the transaction on the at least one customer account has been indicated as being fraudulent by the customer (40), and communicates an indication to the institution (50) of whether the transaction is indicated as being fraudulent by the customer (40).

20. The transaction authorisation method of claim 12, wherein the communication with the customer (40) via the RCD (30) includes the use of an interactive voice response, IVR, system.

21. The transaction authorisation method of claim 20, wherein the IVR system provides the customer (40) with at least the options of authorising the transaction, cancelling the transaction or indicating the transaction as fraudulent.

22. The transaction authorisation method of claim 12, wherein communication with the customer (40) via the RCD (30) is enabled using stored RCD contact information.

## Patentansprüche

1. Transaktionsautorisationssystem (20) um einem Kunden (40) zu erlauben, Transaktionen zu autorisieren, die mindestens ein mit einer Institution (50) verbundenes Kundenkonto betreffen, wobei das System umfasst:
Datenspeichereinrichtungen (24) zur Berechtigung von Zugang auf und Speicherung von
(a) Kundenidentifikationsdaten, die dem Kunden (40) zugeordnet sind;
(b) Geräteidentifikationsdaten, die einem Fernübertragungsgerät, RCD (30), des Kunden (40) zugeordnet sind; und
(c) Sicherheitskennungsdaten, welche nur der Institution (50) und dem Autorisationssystem (20) bekannt sind, die das mindestens eine Kundenkonto (a) und (b) zuordnen;
ein erstes Kommunikationsmittel zur Berechtigung von Kommunikation mit dem Kunden (40) über das RCD (30), um eine Transaktion auf dem mindestens einen Kundenkonto zu autorisieren;
eine Datenverarbeitungsarchitektur mit Datenverarbeitungseinrichtungen zum Feststellen des Kunden (40) unter Verwendung von (a), Erkennen des RCD (30) unter Verwendung von (b) und Feststellen, ob die Transaktion durch den Kunden (40) autorisiert ist; und
ein zweites Kommunikationsmittel zum Empfangen einer Autorisationsaufforderung in Bezug auf die Transaktion und Bereitstellen einer Anzeige an die Institution (50), ob die Transaktion durch den Kunden (40) autorisiert ist oder nicht, wobei die empfangene Autorisationsaufforderung und die der Institution (50) zur Verfügung gestellte Anzeige auf die Sicherheitskennungsdaten bezogen sind, und wobei die Sicherheitskennungsdaten nicht die gleichen sind wie Charakteristiken des Kunden (40) oder diesen betreffende persönliche Informationen und auch nicht davon abgeleitet sind, wobei die einzige, den Kunden (40) und das RCD (30) betreffende Kennung, die sich zwischen der Institution (50) und dem Autorisationssystem (20) bewegt, die Sicherheitskennungsdaten sind.

2. Transaktionsautorisationssystem nach Anspruch 1, wobei die Sicherheitskennungsdaten nicht zu dem Kunden (40) kommuniziert werden.

3. Transaktionsautorisationssystem nach Anspruch 1, wobei das erste Kommunikationsmittel die Kommunikation mit dem Kunden (40) über das RCD (30) ermöglicht, indem ein Kommunikationsmedium genutzt wird, welches verschieden von dem zum Führen der Transaktion verwendeten Kommunikationsmedium ist.

4. Transaktionsautorisationssystem nach Anspruch 1, wobei das erste Kommunikationsmittel die Kommunikation mit dem Kunden (40) über das RCD (30) ermöglicht, indem zwei oder mehrere Kommunikationssitzungen genutzt werden.

5. Transaktionsautorisationssystem nach Anspruch 1, wobei (a) eine oder mehrere von einer PIN, einem Passwort, einem Passausdruck oder biometrischen Daten umfasst.

6. Transaktionsautorisationssystem nach Anspruch 1, wobei der Kunde (40) identifiziert wird
durch Vergleichen (a) mit einer Sprachkopie oder biometrischen Sprachdaten, die aus einer verbalen Antwort durch den Kunden (40) auf ein Zufallswort, einen Satz und/oder eine durch das System bewirkte Aufforderung zur Information abgeleitet sind, und Vergleichen der verbalen Antwort des Kunden (40) auf das zufällig generierte Wort oder Satz und/oder Informationen, auf die durch das System zugegriffen wird.

7. Transaktionsautorisationssystem nach Anspruch 1, wobei (b) eine oder mehrere von einer Telefonnummer, einer Internationalen Kennung der Mobilstation, IMEI, Internet-Protokoll-Adresse oder Medienzugangskontrolladresse, MAC, umfasst.

8. Transaktionsautorisationssystem nach Anspruch 1, wobei das erste Kommunikationsmittel dem Kunden (40) erlaubt anzuzeigen, falls eine Transaktion auf dem zumindest einen Kundenkonto betrügerisch ist, die Datenverarbeitungseinrichtung feststellt, ob die Transaktion durch den Kunden (40) als betrügerisch angezeigt worden ist, und das zweite Kommunikationsmittel der Institution (50) eine Anzeige zur Verfügung stellt, ob die Transaktion durch den Kunden (40) als betrügerisch angezeigt ist.

9. Transaktionsautorisationssystem nach Anspruch 1, wobei das erste Kommunikationsmittel ein interaktives Sprachausgabesystem, IVR, umfasst.

10. Transaktionsautorisationssystem nach Anspruch 9, wobei das IVR-System dem Kunden (40) zumindest die Optionen zum Autorisieren der Transaktion, Löschen der Transaktion oder Anzeigen der Transaktion als betrügerisch bereitstellt.

11. Transaktionsautorisationssystem nach Anspruch 1, wobei die Datenspeichereinrichtung des Weiteren den Zugriff auf RCD-Kontaktinformationen zur Verwendung durch das erste Kommunikationsmittel bei Berechtigung von Kommunikation mit dem Kunden (40) über das RCD (30) möglich macht.

12. Verfahren um einem Kunden (40) zu erlauben, Transaktionen zu autorisieren, die mindestens ein an einer Institution (50) aufgenommenes Kundenkonto betreffen, wobei das Verfahren die Schritte umfasst:
a) Empfangen im Autorisationsserver (20) einer Autorisationsaufforderung von der Institution in Bezug auf eine Transaktion auf dem mindestens einen Kundenkonto;
b) Kommunizieren des Autorisationsservers (20) mit dem Kunden (40) über ein Fernübertragungsgerät, RCD (30), des Kunden (40), um die Transaktion zu autorisieren;
c) Erkennen des Kunden (40) im Autorisationsserver (20) mittels gespeicherter, dem Kunden (40) zugeordneter Kundenidentifizierungsdaten, auf die der Autorisationsserver (20) Zugriff hat, die Kundenidentifizierungsdaten, die in einer Datenbank (24) des Autorisationsservers (20) gespeichert sind;
d) Erkennen des RCD (30) im Autorisationsserver (20) mittels gespeicherter, dem RCD (30) zugeordneter Geräteidentifizierungsdaten, auf die der Autorisationsserver (20) Zugriff hat, die Geräteidentifizierungsdaten, die in einer Datenbank (24) des Autorisationsservers (20) gespeichert sind;
e) Feststellen im Autorisationsserver (20), ob die Transaktion durch den Kunden (40) autorisiert ist;
f) Kommunizieren im Autorisationsserver (20) einer Anzeige an die Institution (50), ob die Transaktion durch den Kunden (40) autorisiert ist oder nicht,
wobei die von dem Autorisationsserver (20) empfangene Autorisationsaufforderung und die der Institution (50) bereitgestellte Anzeige durch die Institution (50) und den Autorisationsserver (20) auf Sicherheitskennungsdaten bezogen sind, um das mindestens eine Kundenkonto in Zusammenhang zu bringen mit den gespeicherten, dem Kunden (40) zugeordneten Kundenidentifizierungsdaten und den gespeicherten, dem RCD (30) zugeordneten Geräteidentifizierungsdaten, wobei die Sicherheitskennungsdaten nur dem Autorisationsserver (20) und der Institution (50) bekannt sind, und wobei die Sicherheitskennungsdaten nicht die gleichen sind wie Charakteristiken des Kunden (40) oder diesen betreffende persönliche Informationen und auch nicht davon abgeleitet sind; und
wobei die einzige, den Kunden (40) und das RCD (30) betreffende Kennung, die sich zwischen der Institution (50) und dem Autorisationsserver (20) bewegt, die Sicherheitskennungsdaten sind.

13. Transaktionsautorisationsverfahren nach Anspruch 12, wobei die Sicherheitskennungsdaten nicht zu dem Kunden (40) kommuniziert werden.

14. Transaktionsautorisationsverfahren nach Anspruch 12, wobei die Kommunikation mit dem Kunden (40) über das RCD (30) ein Kommunikationsmedium verwendet, das von dem zum Führen der Transaktion genutzten Kommunikationsmedium verschieden ist.

15. Transaktionsautorisationsverfahren nach Anspruch 12, wobei die Kommunikation mit dem Kunden (40) über das RCD (30) zwei oder mehrere Kommunikationssitzungen nutzt.

16. Transaktionsautorisationsverfahren nach Anspruch 12, wobei die gespeicherten, dem Kunden (40) zugeordneten Identifizierungsdaten eine oder mehrere einer PIN, einem Passwort, einen Passausdruck oder biometrischen Daten umfasst.

17. Transaktionsautorisationsverfahren nach Anspruch 12, wobei Schritt c) die untergeordneten Schritte des
i) Vergleichens der dem Kunden (40) zugeordneten Kundenidentifizierungsdaten im Autorisationsserver (20) mit einer Sprachkopie oder biometrischen Sprachdaten, die aus einer verbalen Antwort von dem Kunden (40) auf ein Zufallswort, einen Satz und/oder eine durch den Autorisationsserver (20) bewirkten Aufforderung zur Information abgeleitet sind; und des
ii) Vergleichens der verbalen Antwort des Kunden (40) im Autorisationsserver (20) auf das zufällig generierte Wort oder Satz und/oder Informationen, auf die durch den Autorisationsserver (20) zugegriffen wird,
einschließt.

18. Transaktionsautorisationsverfahren nach Anspruch 12, wobei gespeicherte, dem RCD (30) zugeordnete Geräteidentifizierungsdaten eine oder mehrere von einer Telefonnummer, einer Internationalen Kennung der Mobilstation, IMEI, Internet-Protokoll-Adresse oder Medienzugangskontrolladresse, MAC, umfasst.

19. Transaktionsautorisationsverfahren nach Anspruch 12, wobei der Autorisationsserver (20) feststellt, ob die Transaktion auf dem zumindest einen Kundenkonto durch den Kunden (40) als betrügerisch angezeigt worden ist, und eine Anzeige an die Institution (50) kommuniziert, ob die Transaktion durch den Kunden (40) als betrügerisch angezeigt ist.

20. Transaktionsautorisationsverfahren nach Anspruch 12, wobei die Kommunikation mit dem Kunden (40) über das RCD (30) die Verwendung eines interaktiven Sprachausgabesystems, IVR, umfasst.

21. Transaktionsautorisationsverfahren nach Anspruch 20, wobei das IVR-System dem Kunden (40) zumindest die Optionen zum Autorisieren der Transaktion, Löschen der Transaktion oder Anzeigen der Transaktion als betrügerisch bereitstellt.

22. Transaktionsautorisationsverfahren nach Anspruch 12, wobei eine Kommunikation mit dem Kunden (40) über das RCD (30) mittels gespeicherter RCD-Kontaktinformationen möglich gemacht wird.

## Revendications

1. Système d'autorisation de transaction (20) pour permettre à un client (40) d'autoriser des transactions en relation avec au moins un compte client associé à une institution (50), le système incluant :
un moyen de stockage de données (24) pour permettre l'accès à et le stockage de
a) données d'identification client associées au client (40) ;
b) données d'identification de dispositifs associés à un dispositif de communication à distance "DCD" (30), du client (40) ; et
c) données d'identification de sécurité qui sont connues uniquement de l'institution (50) et du système d'autorisation (20) et associant ledit au moins un compte client avec a) et b) ;
un premier moyen de communication pour permettre une communication avec le client (40) via le DCD (30) et autoriser une transaction sur ledit au moins un compte client ;
une architecture de traitement de données incluant des moyens de traitement de données pour identifier le client (40) en utilisant a), pour identifier le dispositif DCD (30) en utilisant b), et pour déterminer si la transaction est autorisée par le client (40) ; et
un second moyen de communication pour recevoir une requête d'autorisation en relation avec la transaction et fournir une indication à l'institution (50) quant à savoir si la transaction est autorisée ou non par le client (40), dans lequel la requête d'autorisation reçue et l'indication fournie à l'institution (50) sont mises en référence avec les données d'identification de sécurité, et
dans lequel les données d'identification de sécurité ne sont pas les mêmes que, et ne sont pas non plus dérivées de, des caractéristiques ou des informations personnelles en relation avec le client (40),
dans lequel la seule identification en relation avec le client (40) et le DCD (30) qui passe entre l'institution (50) et le système d'autorisation (20) est représentée par les données d'identification de sécurité.

2. Système d'autorisation de transaction selon la revendication 1, dans lequel les données d'identification de sécurité ne sont pas communiquées au client (40).

3. Système d'autorisation de transaction selon la revendication 1, dans lequel le premier moyen de communication permet une communication avec le client (40) via le DCD (30) en utilisant un support de communication qui est distinct du support de communication utilisé pour mener la transaction.

4. Système d'autorisation de transaction selon la revendication 1, dans lequel le premier moyen de communication permet une communication avec le client (40) via le DCD (30) en utilisant deux ou plusieurs sessions de communication.

5. Système d'autorisation de transaction selon la revendication 1, dans lequel a) inclut un ou plusieurs paramètres parmi un numéro d'identification personnel "PIN", un mot de passe, une phrase de passe, ou des données biométriques.

6. Système d'autorisation de transaction selon la revendication 1, dans lequel le client (40) est identifié en comparant a) à une empreinte vocale ou à des données biométriques vocales dérivées d'une réponse verbale par le client (40) à un mot aléatoire, une phrase et/ou une requête pour des informations fournies par le système, et en comparant la réponse verbale du client (40) au mot généré de façon aléatoire ou à la phrase et/ou aux informations accédées par le système.

7. Système d'autorisation de transaction selon la revendication 1, dans lequel b) inclut une ou plusieurs des données parmi un numéro de téléphone, un code d'identité internationale pour équipement mobile "IMEI", une adresse de protocole Internet "IP", ou une adresse de commande d'accès média "MAC".

8. Système d'autorisation de transaction selon la revendication 1, dans lequel le premier moyen de communication permet au client (40) d'indiquer si une transaction sur ledit au moins un compte client est frauduleuse, le moyen de traitement de données détermine si la transaction a été indiquée comme frauduleuse par le client (40), et le second moyen de communication fournit une indication à l'institution (50) quant à savoir si la transaction est indiquée comme frauduleuse par le client (40).

9. Système d'autorisation de transaction selon la revendication 1, dans lequel le premier moyen de communication inclut un système de réponse vocal interactif "IVR".

10. Système d'autorisation de transaction selon la revendication 9, dans lequel le système IVR fournit au client (40) au moins les options d'autoriser la transaction, d'annuler la transaction, ou d'indiquer la transaction comme frauduleuse.

11. Système d'autorisation de transaction selon la revendication 1, dans lequel le moyen de stockage de données permet en outre l'accès à des informations de contact du DCD, à utiliser par le premier moyen de communication pour permettre une communication avec le client (40) via le DCD (30).

12. Procédé pour permettre à un client (40) d'autoriser des transactions en relation avec au moins un compte client tenu auprès d'une institution (50), le procédé incluant les étapes suivantes :
a) un serveur d'autorisation (20) reçoit une requête d'autorisation depuis l'institution en relation avec une transaction sur ledit au moins un compte client ;
b) le serveur d'autorisation (20) communique avec le client (40) via un dispositif de communication à distance "DCD" (30) du client (40) pour autoriser la transaction ;
c) le serveur d'autorisation (20) identifie le client (40) en utilisant des données d'identification client stockées et associées avec le client (40), auquel le serveur d'autorisation (20) a accès, les données d'identification client étant stockées dans une base de données (24) du serveur d'autorisation (20) ;
d) le serveur d'autorisation (20) identifie le DCD (30) en utilisant des données d'identification de dispositif stockées et associées au DCD (30), auquel le serveur d'autorisation (20) a accès, les données d'identification de dispositifs étant stockées dans une base de données (24) du serveur d'autorisation (20) ;
e) le serveur d'autorisation (20) détermine si la transaction est autorisée par le client (40) ;
f) le serveur d'autorisation (20) communique une indication à l'institution (50) quant à savoir si la transaction est ou non autorisée par le client (40),
dans lequel la requête d'autorisation reçue par le serveur d'autorisation (20) et l'indication fournie à l'institution (50) sont mises en référence par l'institution (50) et par le serveur d'autorisation (20) à des données d'identification de sécurité pour associer ledit au moins un compte client avec les données d'identification de client stockées et associées au client (40), et avec les données d'identification de dispositif stockées associées avec le dispositif DCD (30), dans lequel les données d'identification de sécurité sont connues uniquement du serveur d'autorisation (20) et de l'institution (50), et dans lequel les données d'identification de sécurité ne sont pas les mêmes que, et ne sont pas non plus dérivées de, des caractéristiques ou des informations personnelles en relation avec le client (40), et
dans lequel la seule identification en relation avec le client (40) et avec le DCD (30) qui passe entre l'institution (50) et le serveur d'autorisation (20) est les données d'identification de sécurité.

13. Procédé d'autorisation de transaction selon la revendication 12, dans lequel les données d'identification de sécurité ne sont pas communiquées au client (40).

14. Procédé d'autorisation de transaction selon la revendication 12, dans lequel la communication avec le client (40) via le DCD (30) utilise un support de communication qui est distinct du support de communication utilisé pour mener la transaction.

15. Procédé d'autorisation de transaction selon la revendication 12, dans lequel la communication avec le client (40) via le DCD (30) utilise deux ou plusieurs sessions de communication.

16. Procédé d'autorisation de transaction selon la revendication 12, dans lequel les données d'identification stockées associées au client (40) incluent un ou plusieurs paramètres parmi un numéro d'identification individuel "PIN", un mot de passe, une phrase de passe, ou des données biométriques.

17. Procédé d'autorisation de transaction selon la revendication 12, dans lequel l'étape c) implique les sous-étapes suivantes :
i) le serveur d'autorisation (20) compare les données d'identification client associées au client (40) a une empreinte vocale ou à des données vocales biométriques dérivées d'une réponse verbale par le client (40) à un mot choisi au hasard, une phrase et/ou une requête pour des informations fournies par le serveur d'autorisation (20) ; et
ii) le serveur d'autorisation (20) compare la réponse verbale du client (40) au mot ou à la phrase généré(e) de façon aléatoire, et/ou à des informations accédées par le serveur d'autorisation (20).

18. Procédé d'autorisation de transaction selon la revendication 12, dans lequel des données d'identification de dispositif stockées et associées au dispositif DCD (30) incluent un ou plusieurs paramètres parmi un numéro de téléphone, une identité internationale pour équipement mobile "IMEI, une adresse au protocole Internet "IP", ou une adresse de commande d'accès média "MAC".

19. Procédé d'autorisation de transaction selon la revendication 12, dans lequel le serveur d'autorisation (20) détermine si la transaction sur ledit au moins un compte client a été indiquée comme étant frauduleuse par le client (40), et communique une indication à l'institution (50) quant à savoir si la transaction est indiquée comme frauduleuse par le client (40).

20. Procédé d'autorisation de transaction selon la revendication 12, dans lequel la communication avec le client (40) via le DCD (30) inclut l'utilisation d'un système de réponse vocal interactif "IVR".

21. Procédé d'autorisation de transaction selon la revendication 20, dans lequel le système IVR fournit au client (40) au moins les options consistant à autoriser la transaction, annuler la transaction, ou indiquer la transaction comme frauduleuse.

22. Procédé d'autorisation de transaction selon la revendication 12, dans lequel une communication avec le client (40) via le DCD (30) est rendue possible en utilisant des informations de contact DCD stockées.
